# EUROPEAN PATENT APPLICATION

(11) **EP 2 206 541 A1**
(43) Date of publication of application: **14.07.2010**
(21) Application number: 09360003.9
(22) Date of filing: 07.01.2009
(51) Int. Cl.: A63H 17/00, A63H 23/00, B62K 5/00

(54) **Wheeled inflatable toy**

(71) Applicant: Huang, Ming-Tai, Taipei (TW)
(72) Inventor: Huang, Ming-Tai, Taipei (TW)
(74) Representative: Metz, Paul

(57) **Abstract**

A wheeled inflatable toy includes an inflatable portion (20) having a body (22) with a nozzle (28) allowing inflation and deflation of the body (22). The body (22) includes an underside having an engaging section (200). The wheeled inflatable body further includes a base (30) having a plurality of pivotal portions (34). A wheel (38) is rotatably coupled to each pivotal portion (34). The base (30) further includes a coupling portion (36) engaged with the engaging section (200) to couple the inflatable portion (20) with the base (30).

## Description

### BACKGROUND OF THE INVENTION

The present invention relates to a wheeled inflatable toy and, more particularly, to a toy including an inflatable body and wheels attached to an underside of the inflatable body.

Wheeled toys for children generally include a rigid body made of plastic material and having a shape in the form of a vehicle or an animal. Wheels are rotatably coupled to a bottom of the body, so that a user can push the toy for fun. However, the user may be injured by the sharp edge of the body. Furthermore, the toy can not float on water. Further, the toy can not be deflated, leading to an increase in the costs for packaging and transport and to inconvenient storage.

Thus, a need exists for a wheeled inflatable toy that can float on water while allowing easy storage and reducing costs for packaging and transport.

### BRIEF SUMMARY OF THE INVENTION

The present invention solves this need and other problems in the field of toys by providing, in a preferred form, a wheeled inflatable toy including an inflatable portion having a body with a nozzle allowing inflation and deflation of the body. The body includes an underside having an engaging section. The wheeled inflatable body further includes a base having a plurality of pivotal portions. A wheel is rotatably coupled to each pivotal portion. The base further includes a coupling portion engaged with the engaging section to couple the inflatable portion with the base.

In a most preferred form, the base includes a carrier. The pivotal portions include four arms extending outward from the carrier. Each arm has a distal end on which one of the pivotal portions is formed. The coupling portion including four membranes each formed between two of the four arms adjacent to each other. Each membrane is bonded to the engaging section by high frequency welding.

In another most preferred form, the engaging section of the inflatable portion includes a coupling member, and the coupling portion of the base is releasably engaged with the coupling member.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG 1 shows an exploded, perspective view of a wheeled inflatable toy of a first embodiment according to the preferred teachings of the present invention.
FIG 2 shows a side view of the wheeled inflatable toy of FIG 1.
FIG 3 shows a partial, enlarged, cross sectional view of the wheeled inflatable toy of FIG 1 according to section line 3-3 of FIG 2.
FIG 4 shows an exploded, perspective view of a wheeled inflatable toy of a second embodiment according to the preferred teachings of the present invention.
FIG 4A shows an enlarged view of a circled portion of the wheeled inflatable toy of FIG 4.
FIG 4B shows an enlarged view of another circled portion of the wheeled inflatable toy of FIG 4.
FIG 5 shows a perspective view of the wheeled inflatable toy of FIG 4.
FIG 5A shows an enlarged view of a portion of the wheeled inflatable toy of FIG 5.
FIG 6 shows a partial, enlarged, cross sectional view of the wheeled inflatable toy of FIG 5 according to section line 6-6 of FIG 5.
FIG 7 shows a partial, enlarged, cross sectional view of the wheeled inflatable toy of FIG 5 according to section line 7-7 of FIG 5.
FIG 8 shows an exploded, perspective view of a wheeled inflatable toy of a third embodiment according to the preferred teachings of the present invention.
FIG 8A shows an enlarged view of a circled portion of the wheeled inflatable toy of FIG 8.
FIG 8B shows an enlarged view of another portion of the wheeled inflatable toy of FIG 8.
FIG 9 shows a partial, enlarged, cross sectional view of the wheeled inflatable toy of FIG 8.
FIG 10 shows a perspective view of a wheeled inflatable toy of a fourth embodiment according to the preferred teachings of the present invention with a toy figure received in a groove of the wheeled inflatable toy.
FIG 11 shows an exploded, perspective view of a wheeled inflatable toy of a fifth embodiment according to the preferred teachings of the present invention.
FIG 12 shows a side view of the wheeled inflatable toy of FIG 11.
FIG 13 shows a partial, enlarged, cross sectional view of the wheeled inflatable toy of FIG 11.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first" "second", "lower", "upper", "inner", "outer", "side", "end", "portion", "section", "longitudinal", "radial", "vertical", "annular", "outward", "inward", "thickness", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

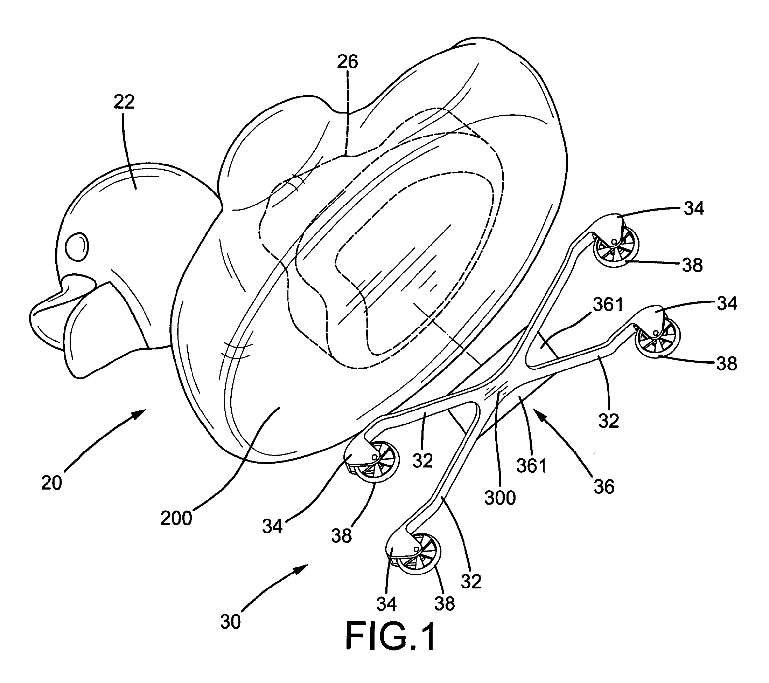

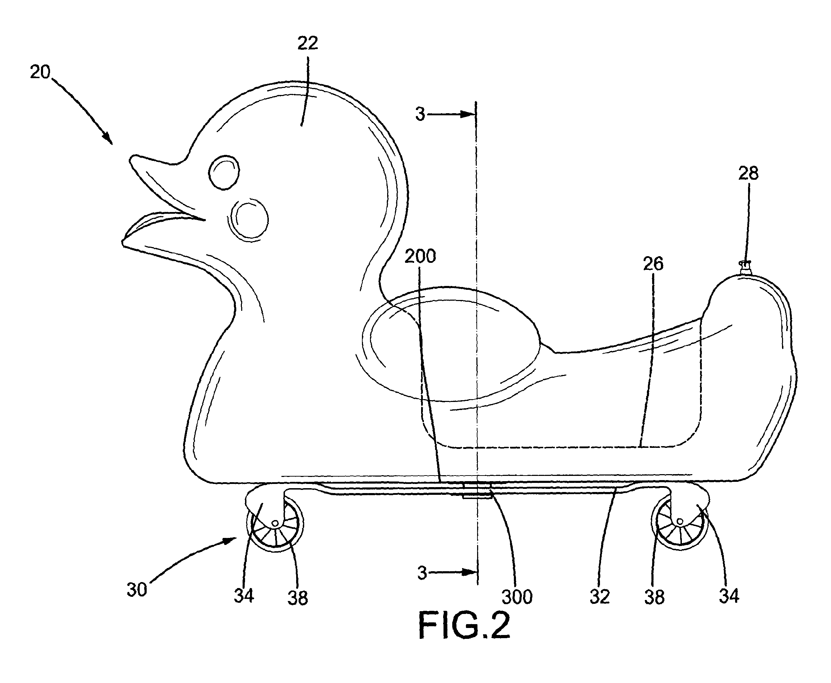

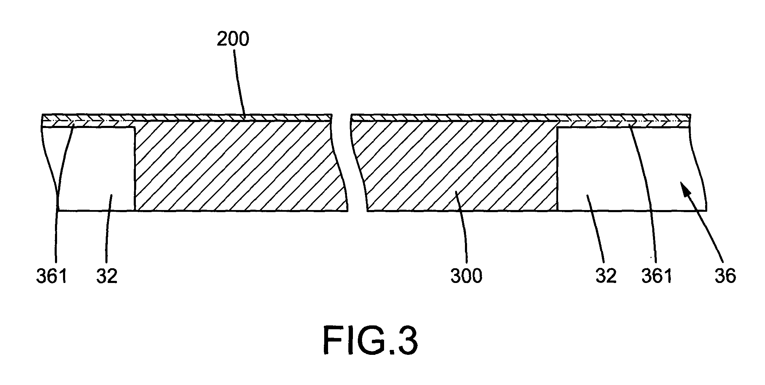

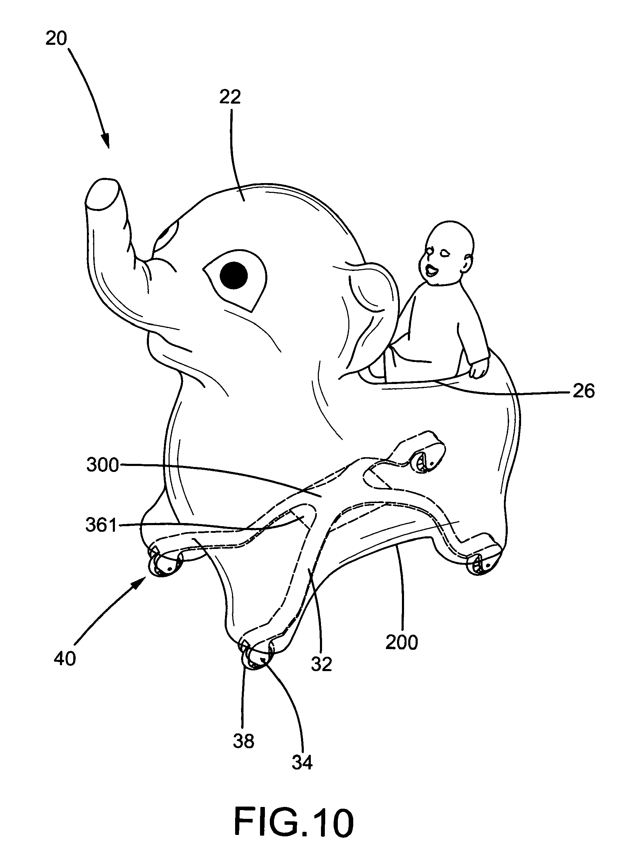

A wheeled inflatable toy of a first embodiment according to the preferred teachings of the present invention is shown in FIGS. 1-3 of the drawings and generally includes an inflatable portion 20 made of polyvinylchloride and having a thickness of about 0.2 mm. Inflatable portion 20 includes a body 22 having an outline of an animal, an animation character, a vehicle, a boat, or any figure. Body 22 in the preferred form shown has an outline of a toy duck and can be filled with air via a nozzle 28 in the preferred form shown as a one-way valve. The body 22 further includes a groove 26 in an outer face thereof for receiving a doll (FIG 10) or the like. Furthermore, body 22 includes an engaging section 200 in the preferred form shown as a flat area of an underside of body 22.

According to the preferred form shown, the wheeled inflatable toy further includes a base 30 having a carrier portion 300 and four legs 32 extending outward from a perimeter of carrier portion 300 and annularly spaced from each other. Each leg 32 includes a distal end forming a pivotal portion 34 to which a wheel 38 is rotatably mounted. A coupling portion 36 is provided on carrier portion 300. In the most preferred form shown, base 30 is made of polyvinylchloride and has a thickness about 2-3 mm. Furthermore, coupling portion 36 includes four membranes 361 each attached between two adjacent legs 32. Each membrane 361 is integrally formed with base 30 by injection molding and has a thickness about 0.2 mm. Membranes 361 are in surface contact with engaging section 200 of body 22, and high frequency welding is then carried out to bond membranes 361 with engaging section 200 of body 22. Thus, inflatable portion 20 is securely engaged with carrier portion 300 of base 30.

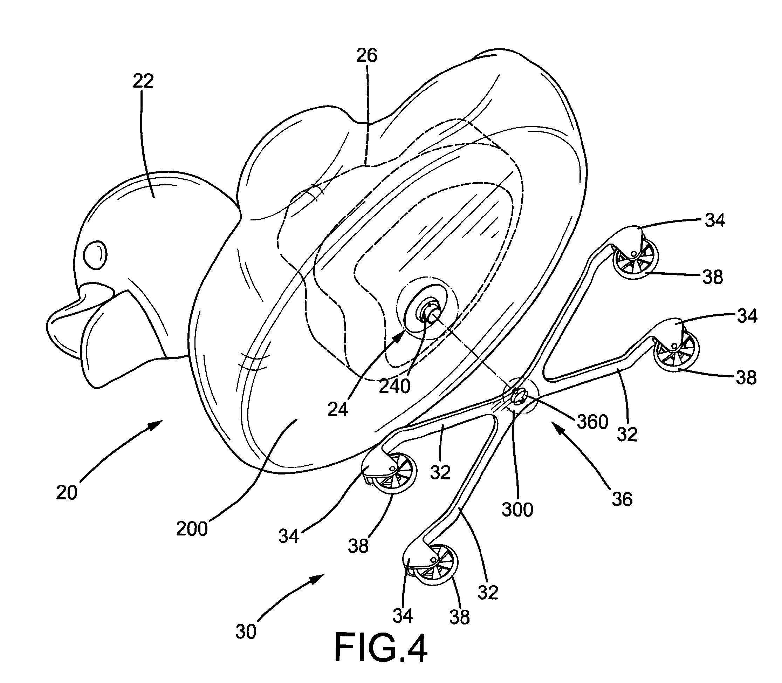

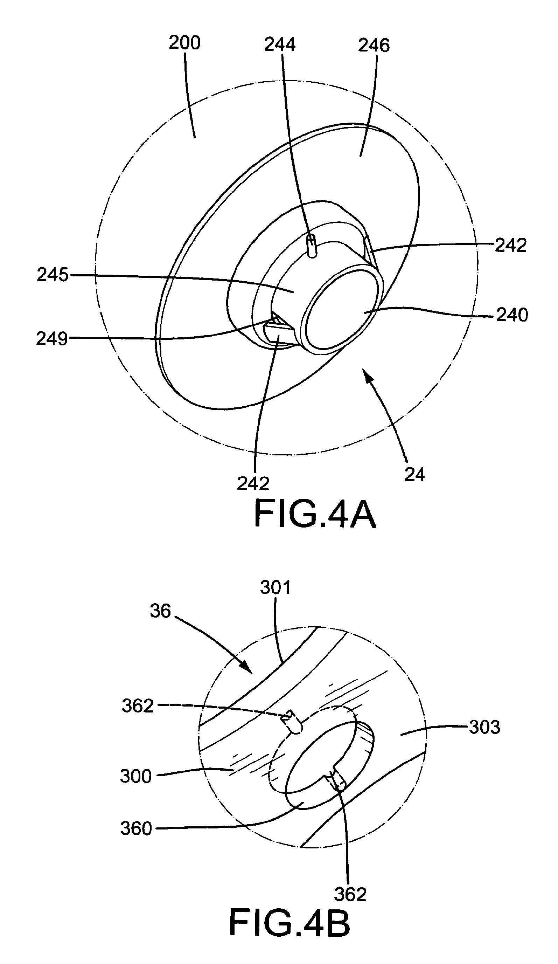

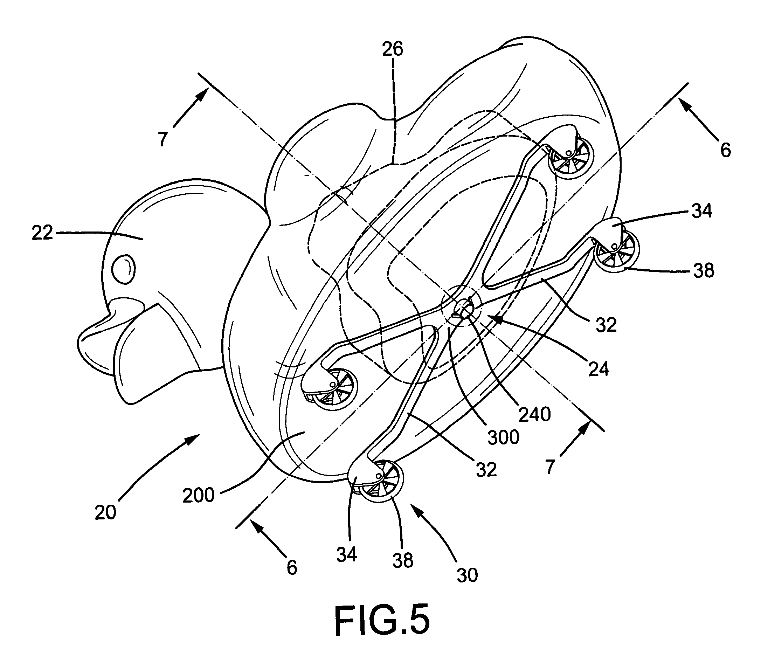

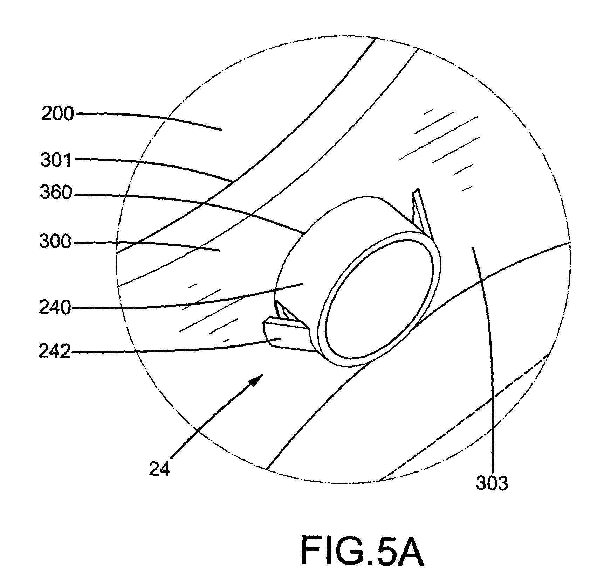

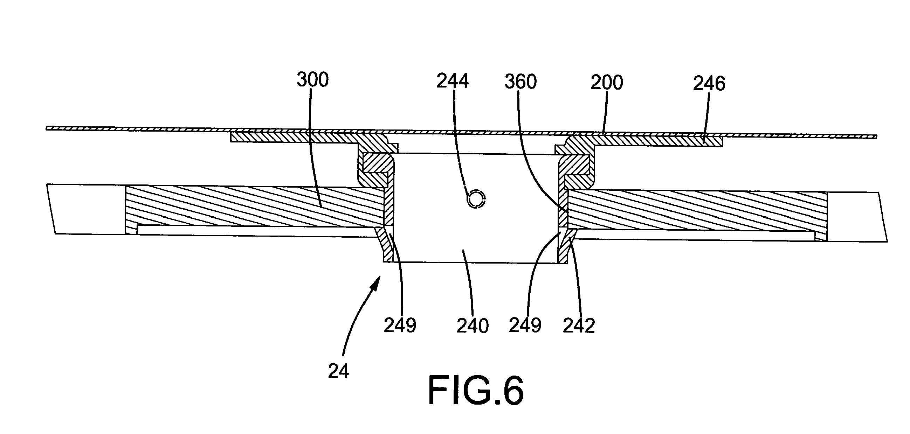

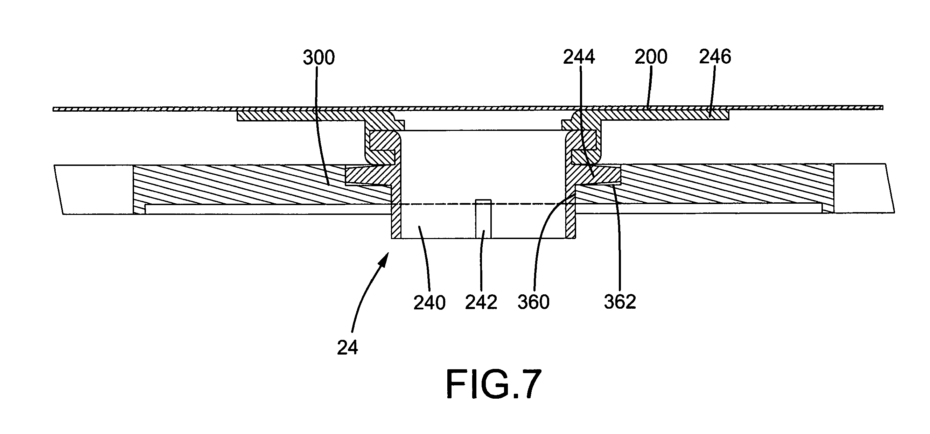

FIGS. 4, 4A, 4B, 5, 5A, 6, and 7 show a second embodiment modified from the first embodiment. In this embodiment, a coupling member 24 is provided on engaging section 200 of body 22 and includes a cylindrical member 240 in the most preferred form shown as a hollow cylindrical tube made of rigid plastic material by injection molding. Cylindrical member 240 includes a peripheral wall 245 having two slots 249 and two resilient tabs 242 each extending radially outward from a side of one of slots 249 beyond an outer circumference of peripheral wall 245. Each resilient tab 242, when subjected to radially inward force, can be pressed radially inward into one of slots 249 to be flush with the outer circumference of peripheral wall 245. Peripheral wall 245 further includes two pegs 244 on the outer circumference. After formation of cylindrical member 240, a flange 246 is formed by injection molding on an end of cylindrical member 240 and made of a material the same as that of body 22. Flange 246 and the underside of body 22 are bonded together by high frequency welding. Furthermore, carrier portion 300 of base 30 includes upper and lower sides 301 and 303 spaced in a vertical direction. Carrier portion 300 further includes a coupling hole 360 extending from upper side 301 through lower side 303 and having an inner periphery with two recesses 362.

In assembly, cylindrical member 240 is extended through coupling hole 360. Resilient tabs 242 are pressed radially inward into slots 249 by the inner periphery of coupling hole 360, such that resilient tabs 242 can pass through coupling hole 360. When resilient tabs 242 have passed through coupling hole 360 to lower side 303 of carrier portion 300, resilient tabs 242 return to their original positions beyond peripheral wall 245 and abut lower side 303. Thus, carrier portion 300 is sandwiched between resilient tabs 242 and engaging section 200. Base 30 can not move in a longitudinal direction of cylindrical member 240. Pegs 244 are received in recesses 362, preventing relative rotation between inflatable portion 20 and base 30. Base 30 can be detached from inflatable portion 20 by pressing resilient tabs 242 into slots 249 and then moving resilient tabs 242 from lower side 303 to upper side 301. Thus, base 30 can be releasably coupled with various inflatable portions 20 having differing outlines.

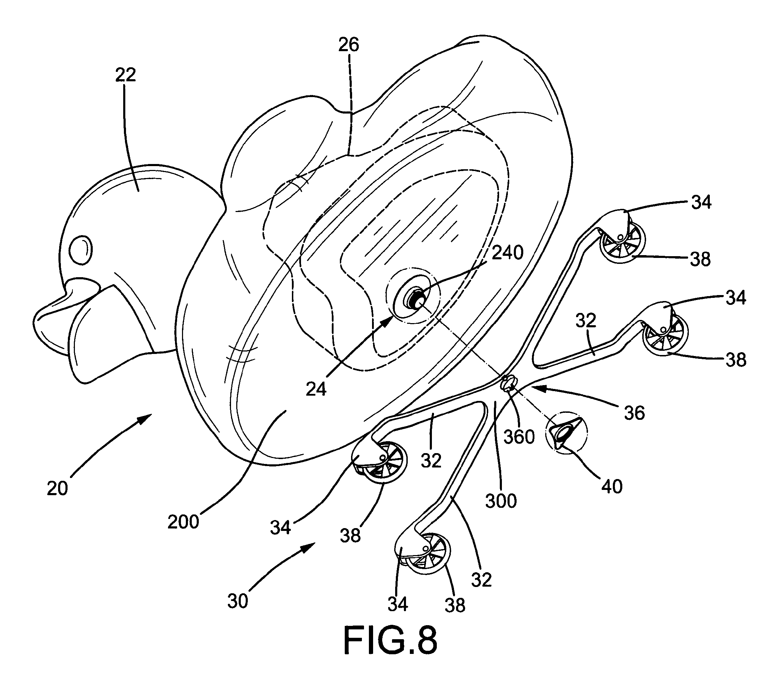

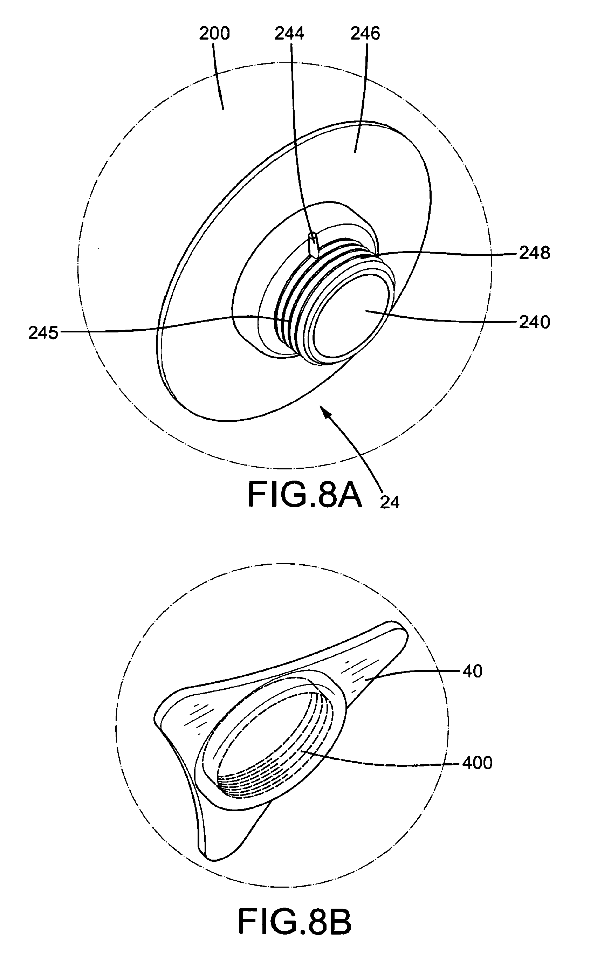

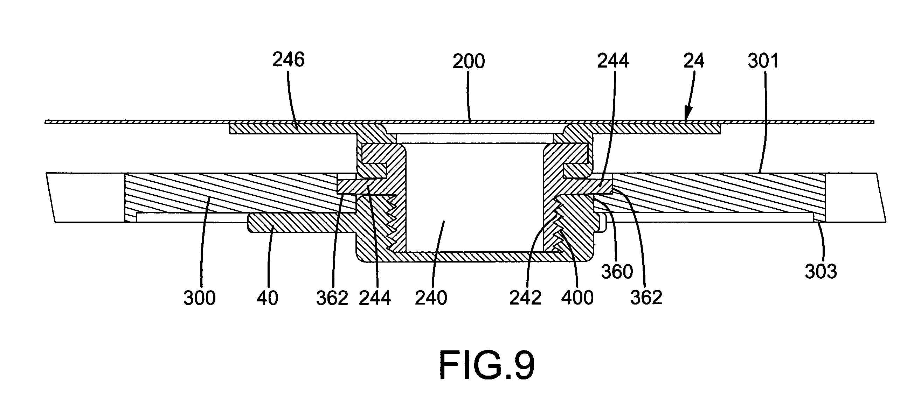

FIGS. 8, 8A, 8B, and 9 show a third embodiment modified from the second embodiment. Slots 249 and resilient tabs 242 in the second embodiment are omitted. Furthermore, the outer circumference of peripheral wall 245 of cylindrical member 240 of coupling member 24 includes a threaded portion 248. Further, a washer 40 having an outer diameter larger than coupling hole 360 of carrier portion 300 and having a screw hole 400 is provided. In assembly, cylindrical member 240 is extended into coupling hole 360 of carrier portion 300 with pegs 244 received in recesses 362. Washer 40 is threadedly engaged around threaded portion 248 and partially received in coupling hole 360. Thus, carrier portion 300 is sandwiched between washer 40 and engaging section 200, preventing movement of base 300 in the longitudinal direction of cylindrical member 240. This embodiment allows rapid detachment and provides enhanced structural strength.

FIG 10 shows a fourth embodiment modified from the first embodiment. Specifically, body 22 of inflatable portion 20 in this embodiment has an outline of a toy elephant, and legs 32 of base 30 are modified to have curved portions corresponding to four legs of the toy elephant. Note that body 22 of inflatable portion 20 in the second and third embodiments can have other outlines, and the shapes of legs 32 of base 30 correspond to the outline of body 22.

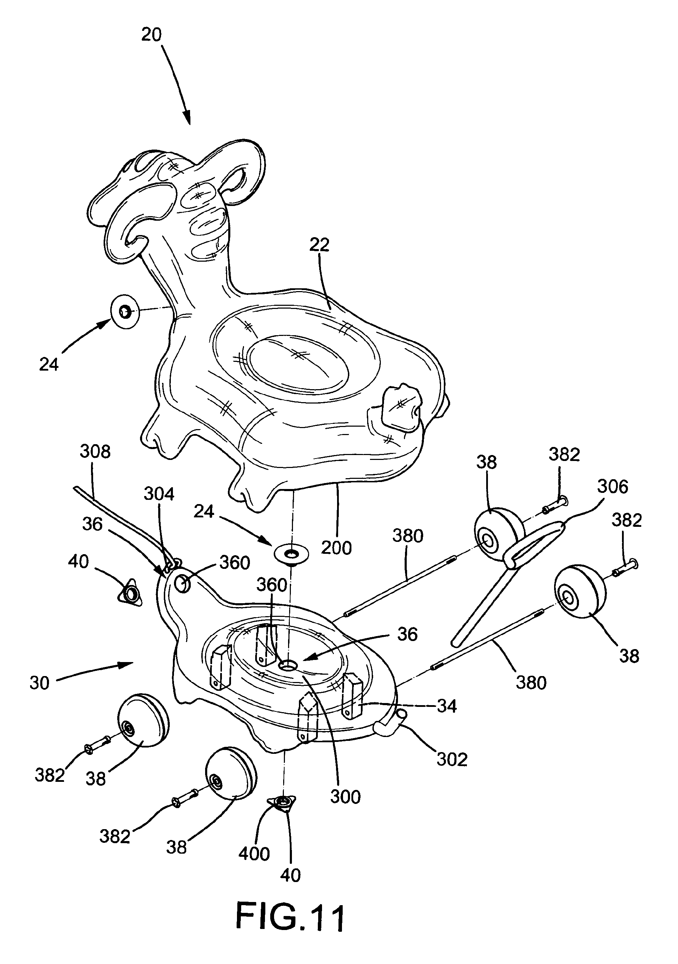

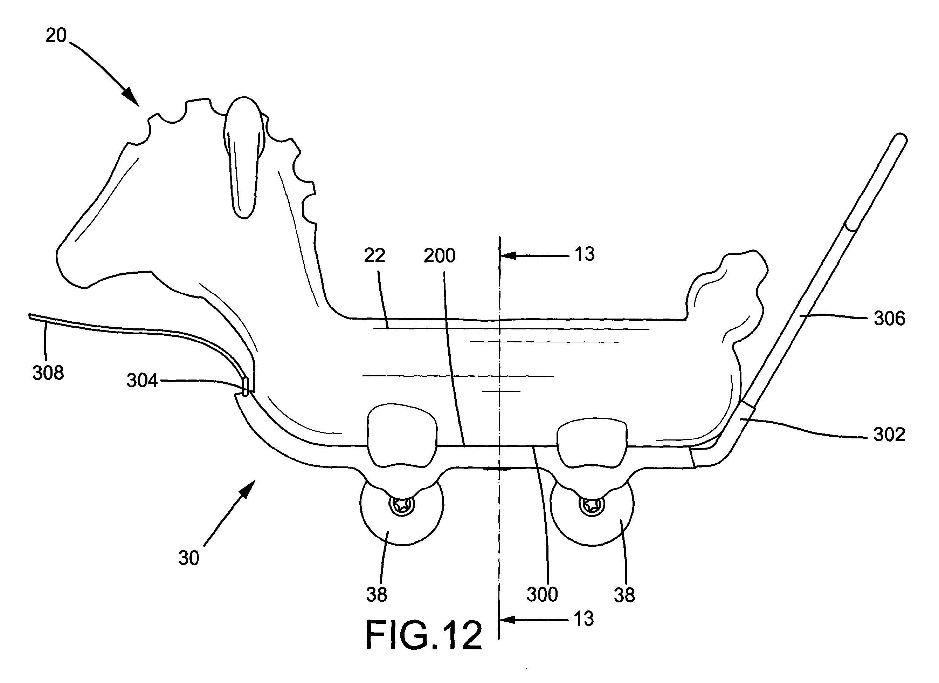

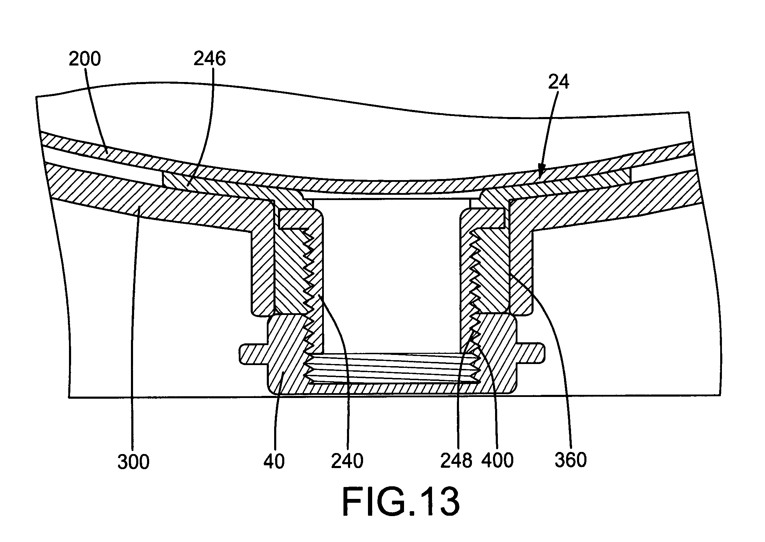

FIGS. 11-13 show a fifth embodiment according to the preferred teachings of the present invention. Specifically, body 22 of inflatable portion 20 in this embodiment has an outline of a toy goat. Furthermore, body 22 includes first and second engaging sections 200 on the underside thereof. In the most preferred form shown, first engaging section 200 is at a center of the underside of the toy goat body, and second engaging section 200 is at the underside of the neck of the toy goat. First and second coupling members 24 are respectively provided on first and second engaging sections 200. Each of first and second coupling members 24 is identical to coupling member 24 of the third embodiment and includes a flange 246 formed on an end thereof by injection molding. Each flange 246 is bonded with one of first and second engaging sections 200 by high frequency welding to attach first and second coupling members 24 to body 22. Carrier portion 300 of base 30 has a shape corresponding to the underside of body 22. Carrier portion 300 further includes a coupling tube 302 at a rear end thereof and a ring 304 at a front end thereof. Furthermore, carrier portion 300 includes first and second coupling portions 36 respectively at a central section thereof and the front end thereof. Each of first and second coupling portions 36 has a coupling hole 360 extending from upper side 301 through lower side 303 and having an inner periphery with two recesses 362. Further, carrier portion 300 includes four pivotal portions 34 on an underside thereof. An axle 380 is rotatably extended through a pair of pivotal portions 34. A wheel 38 is mounted to each of two ends of each axle 380. A pin 382 is attached to each end of each axle 380 to prevent wheels 38 from disengaging from axles 380 while allowing rotation of wheels 38 relative to pivotal portions 34.

In assembly, body 22 is placed on carrier portion 300 of base 30 with first and second engaging portions 200 resting on carrier portion 300. Cylindrical members 240 of first and second coupling members 24 are extended through coupling holes 360 of first and second coupling portions 36. A washer 400 having a screw hole 400 is mounted around and threadedly engaged with threaded portion 248 of each of first and second coupling members 24. Thus, base 30 and inflatable portion 20 are releasably coupled together. Note that inflatable body 20 is made of polyvinylchloride and has a thickness of 0.2-1 mm to enhance the structural strength of inflatable portion 20, so that the inflatable portion 20 is strong enough to support a child. A handle 306 can be coupled to coupling tube 302, so that a user can grip handle 306 to move the wheeled inflatable toy forward. A string 308 can be attached to ring 304 to allow the user to pull the whole wheeled inflatable toy forward.

In use, the wheeled inflatable toy after inflation can be placed on the ground and easily moved due to provision of wheels 38. Alternatively, the wheeled inflatable toy after inflation can float on water with the weight of base 30 providing a balancing effect for inflatable portion 20 to reduce rolling and pitching of inflatable portion 20. The air in inflatable portion 20 can be released to reduce the volume for storage and transport, saving the costs for packaging and transport while allowing convenient storage.

Now that the basic teachings of the present invention have been explained, many extensions and variations will be obvious to one having ordinary skill in the art. For example, engaging section 200 of inflatable portion 20 can include one or more male couplers, and base 30 can include one or more female couplers engaging with male couplers to engage inflatable portion 20 with base 30. Furthermore, the inner periphery of coupling hole 360 can include only one recess 362. In this case, coupling member 24 can include only one peg 244. Furthermore, peripheral wall 245 of cylindrical member 240 can include only one resilient tab 242 and only one opening 249.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A wheeled inflatable toy comprising:
an inflatable portion (20) including a body (22) having a nozzle (28) allowing inflation and deflation of the body (22), with the body (22) including an underside having a first engaging section (200); and
a base (30) including a plurality of pivotal portions (34), with a wheel (38) rotatably coupled to each of the plurality of pivotal portions (34), with the base (30) further including a first coupling portion (36) engaged with the first engaging section (200) to couple the inflatable portion (20) with the base (30).

2. The wheeled inflatable toy as claimed in claim 1, with the base (30) including a carrier (300), with the plurality of pivotal portions (34) including four arms (32) extending outward from the carrier (300), with each of the four arms (32) having a distal end on which one of the plurality of pivotal portions (34) is formed, with the first coupling portion (36) including four membranes (361) each formed between two of the four arms (32) adjacent to each other, and with each of the four membranes (361) bonded to the first engaging section (200) by high frequency welding.

3. The wheeled inflatable toy as claimed in claim 1, with the first engaging section (200) of the inflatable portion (20) including a first coupling member (24), and with the first coupling portion (36) of the base (30) releasably engaged with the first coupling member (24).

4. The wheeled inflatable toy as claimed in claim 3, with the base (30) including a carrier (300) having an upper side (301) and a lower side (303) spaced from the upper side (301) in a vertical direction, with the first coupling portion (36) including a coupling hole (360) extending from the upper side (301) through the lower side (303) of the carrier (300), with the coupling hole (360) including an inner periphery having a recess (362), with the first coupling member (24) including a cylindrical member (240) having a peripheral wall (245), with the peripheral wall (245) including an outer circumference having a peg (244) and a slot (249), with a resilient tab (242) extending radially outward from a side of the slot (249), with the resilient tab (242) pressed inward into the slot (249) and moved from the upper side (301) to the lower side (303) of the carrier portion (300) when the cylindrical member (240) is extended through the coupling hole (360), so that the resilient tab (242) abuts the lower side (303) of the carrier portion (300), and with the peg (244) of the first coupling member (24) received in the recess (362) of the coupling hole (360) of the first coupling portion (36) to prevent relative rotation between the inflatable portion (20) and the base (30).

5. The wheeled inflatable toy as claimed in claim 3, with the base (30) including a carrier (300) having an upper side (301) and a lower side (303) spaced from the upper side (301) in a vertical direction, with the first coupling portion (36) including a coupling hole (360) extending from the upper side (301) through the lower side (303) of the carrier (300), with the coupling hole (360) including an inner periphery having a recess (362), with the first coupling member (24) including a cylindrical member (240) having a peripheral wall (245), with the peripheral wall (245) including an outer circumference having a peg (244) and a threaded portion (248), with the cylindrical member (240) extended through the coupling hole (360), with the wheeled inflatable toy further including a washer (40) having a screw hole (400), with the washer (40) having an outer diameter larger than a diameter of the coupling hole (360), with the screw hole (400) threadedly engaged with the threaded portion (248) of the peripheral wall (245), with the peg (244) of the first coupling member (24) received in the recess (362) of the coupling hole (360) of the first coupling portion (36) to prevent relative rotation between the inflatable portion (20) and the base (30).

6. The wheeled inflatable toy as claimed in claim 5, with the carrier portion (300) of the base (30) having a shape corresponding to the underside of body (22), with the body (22) further including a second engaging section (200), and with the carrier portion (300) of the base (30) further including a second coupling member (24) releasably coupled with the second engaging section (200).
